# EUROPEAN PATENT APPLICATION

(11) **EP 3 521 762 A1**
(43) Date of publication of application: **07.08.2019**
(21) Application number: 19155026.8
(22) Date of filing: 01.02.2019
(51) Int. Cl.: G01C 21/34

(54) **COLD CHAIN TRANSPORTATION ROUTE MODELING SYSTEM**

(30) Priority: 03.02.2018 IN 201811004130
(71) Applicant: Carrier Corporation, Jupiter, FL 33478 (US)
(72) Inventor: N, Ananthakrishnan, AP 500081 Hyderabad (IN); BEHERA, Shantanu Kumar, 500081 Telangana (IN); DHIMAN, Arnav, 500081 Telangana (IN); STOCKBRIDGE, Michael, Syracuse, NY 13221 (US)
(74) Representative: Dehns

(57) **Abstract**

A method for determining potential routes (102) for perishable goods is provided comprising: storing container parameters (89) of a container (14) to store the perishable goods, vehicle parameters (82) of a vehicle (12) to transport the perishable goods within the container (14), transportation refrigeration unit (TRU) parameters (85) of a transportation refrigeration unit (TRU) (28) to control environment conditions within the container (14), and perishable good requirements for transporting the perishable goods within the container (14); receiving route parameters (81), weather parameters (86), and perishable good parameters (88), the route parameters (81) including an origination location of the perishable goods, a destination location of the perishable goods, and a route time completion window; determining one or more potential routes (102) in response to the route parameters (81); and determining predicted energy source consumption by the TRU (28) for each of the one or more potential routes (102) in response to the vehicle parameters (82), container parameters (84), TRU parameters (85), perishable good requirements (88), route parameters (81), weather parameters (86), and perishable good parameters (88).

## Description

### BACKGROUND

The subject matter disclosed herein generally relates to cold chain distribution systems, and more specifically to an apparatus and a method for determining potential routes to transport perishable goods.

Typically, cold chain distribution systems are used to transport and distribute perishable goods and environmentally sensitive goods (herein referred to as perishable goods) that may be susceptible to temperature, humidity, and other environmental factors. Perishable goods may include but are not limited to fruits, vegetables, grains, beans, nuts, eggs, dairy, seed, flowers, meat, poultry, fish, ice, and pharmaceuticals. Advantageously, cold chain distribution systems allow perishable goods to be effectively transported and distributed without damage or other undesirable effects.

Refrigerated trucks and trailers are commonly used to transport perishable goods in a cold chain distribution system. A transport refrigeration system is mounted to the truck or to the trailer in operative association with a cargo space defined within the truck or trailer for maintaining a controlled temperature environment within the cargo space.

Conventionally, transport refrigeration systems used in connection with refrigerated trucks and refrigerated trailers include a transport refrigeration unit having a refrigerant compressor, a condenser with one or more associated condenser fans, an expansion device, and an evaporator with one or more associated evaporator fans, which are connected via appropriate refrigerant lines in a closed refrigerant flow circuit. Air or an air/ gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

In conventional systems, the trip route for a transport refrigeration systems are determined by a navigation system and the shortest or fastest route is being chosen. The shortest or fastest route is not always the most energy efficient route for the refrigerated trucks.

### BRIEF SUMMARY

According to one embodiment, a method for determining potential routes for perishable goods is provided. The method comprising: storing container parameters of a container to store the perishable goods, vehicle parameters of a vehicle to transport the perishable goods within the container, transportation refrigeration unit (TRU) parameters of a transportation refrigeration unit (TRU) to control environment conditions within the container, and perishable good requirements for transporting the perishable goods within the container; receiving route parameters, weather parameters, and perishable good parameters, the route parameters including an origination location of the perishable goods, a destination location of the perishable goods, and a route time completion window; determining one or more potential routes in response to the route parameters; and determining predicted energy source consumption by the TRU for each of the one or more potential routes in response to the vehicle parameters, container parameters, TRU parameters, perishable good requirements, route parameters, weather parameters, and perishable good parameters.

In addition to one or more of the features described above, or as an alternative, further embodiments may include: determining predicted energy source consumption by the vehicle for each of the one or more potential routes in response to the vehicle parameters, route parameters, and weather parameters.

In addition to one or more of the features described above, or as an alternative, further embodiments may include: determining a total predicted energy consumption of the TRU and the vehicle for each of the one or more potential routes in response to predicted energy source consumption by the TRU and predicted energy source consumption by the vehicle.

In addition to one or more of the features described above, or as an alternative, further embodiments may include: determining a predicted energy source cost of the TRU for each of the one or more potential routes in response to the predicted energy source consumption by the TRU and a price of an energy source of the TRU at every stop along each of the one or more routes.

In addition to one or more of the features described above, or as an alternative, further embodiments may include: determining a predicted energy source cost of the vehicle for each of the one or more potential routes in response to the predicted energy source consumption by the vehicle and a price of an energy source of the vehicle at every stop along each of the one or more routes.

In addition to one or more of the features described above, or as an alternative, further embodiments may include: determining a predicted energy source cost of the TRU for each of the one or more potential routes in response to the predicted energy source consumption by the TRU and a price of an energy source of the TRU at every stop along each of the one or more routes; and determining a total energy source cost for each of the one or more potential routes in response to the predicted energy source cost of the TRU for each of the one or more potential routes and the predicted energy source cost of the vehicle for each of the one or more potential routes.

In addition to one or more of the features described above, or as an alternative, further embodiments may include: displaying each of the one or more potential routes and the predicted energy source consumption by the TRU for each of the one or more potential routes on a user device.

According to an embodiment, a system for determining potential routes for perishable goods is provided. The system comprising: a processor; and a memory comprising computer-executable instructions that, when executed by the processor, cause the processor to perform operations, the operations comprising: storing container parameters of a container to store the perishable goods, vehicle parameters of a vehicle to transport the perishable goods within the container, transportation refrigeration unit (TRU) parameters of a transportation refrigeration unit (TRU) to control environment conditions within the container, and perishable good requirements for transporting the perishable goods within the container; receiving route parameters, weather parameters, and perishable good parameters, the route parameters including an origination location of the perishable goods, a destination location of the perishable goods, and a route time completion window; determining one or more potential routes in response to the route parameters; and determining predicted energy source consumption by the TRU for each of the one or more potential routes in response to the vehicle parameters, container parameters, TRU parameters, perishable good requirements, route parameters, weather parameters, and perishable good parameters.

In addition to one or more of the features described above, or as an alternative, further embodiments may include that the operations further comprise: determining predicted energy source consumption by the vehicle for each of the one or more potential routes in response to the vehicle parameters, route parameters, and weather parameters.

In addition to one or more of the features described above, or as an alternative, further embodiments may include that the operations further comprise: determining a total predicted energy consumption of the TRU and the vehicle for each of the one or more potential routes in response to predicted energy source consumption by the TRU and predicted energy source consumption by the vehicle.

In addition to one or more of the features described above, or as an alternative, further embodiments may include that the operations further comprise: determining a predicted energy source cost of the TRU for each of the one or more potential routes in response to the predicted energy source consumption by the TRU and a price of an energy source of the TRU at every stop along each of the one or more routes.

In addition to one or more of the features described above, or as an alternative, further embodiments may include that the operations further comprise: determining a predicted energy source cost of the vehicle for each of the one or more potential routes in response to the predicted energy source consumption by the vehicle and a price of an energy source of the vehicle at every stop along each of the one or more routes.

In addition to one or more of the features described above, or as an alternative, further embodiments may include that the operations further comprise: determining a predicted energy source cost of the TRU for each of the one or more potential routes in response to the predicted energy source consumption by the TRU and a price of an energy source of the TRU at every stop along each of the one or more routes; and determining a total energy source cost for each of the one or more potential routes in response to the predicted energy source cost of the TRU for each of the one or more potential routes and the predicted energy source cost of the vehicle for each of the one or more potential routes.

In addition to one or more of the features described above, or as an alternative, further embodiments may include that the operations further comprise: displaying each of the one or more potential routes and the predicted energy source consumption by the TRU for each of the one or more potential routes on a user device.

According to an embodiment, a computer program product tangibly embodied on a computer readable medium is provided. The computer program product including instructions that, when executed by a processor, cause the processor to perform operations comprising: storing container parameters of a container to store the perishable goods, vehicle parameters of a vehicle to transport the perishable goods within the container, transportation refrigeration unit (TRU) parameters of a transportation refrigeration unit (TRU) to control environment conditions within the container, and perishable good requirements for transporting the perishable goods within the container; receiving route parameters, weather parameters, and perishable good parameters, the route parameters including an origination location of the perishable goods, a destination location of the perishable goods, and a route time completion window; determining one or more potential routes in response to the route parameters; and determining predicted energy source consumption by the TRU for each of the one or more potential routes in response to the vehicle parameters, container parameters, TRU parameters, perishable good requirements, route parameters, weather parameters, and perishable good parameters.

In addition to one or more of the features described above, or as an alternative, further embodiments may include that the operations further comprise: determining predicted energy source consumption by the vehicle for each of the one or more potential routes in response to the vehicle parameters, route parameters, and weather parameters.

In addition to one or more of the features described above, or as an alternative, further embodiments may include that the operations further comprise: determining a total predicted energy consumption of the TRU and the vehicle for each of the one or more potential routes in response to predicted energy source consumption by the TRU and predicted energy source consumption by the vehicle.

In addition to one or more of the features described above, or as an alternative, further embodiments may include that the operations further comprise: determining a predicted energy source cost of the TRU for each of the one or more potential routes in response to the predicted energy source consumption by the TRU and a price of an energy source of the TRU at every stop along each of the one or more routes.

In addition to one or more of the features described above, or as an alternative, further embodiments may include that the operations further comprise: determining a predicted energy source cost of the vehicle for each of the one or more potential routes in response to the predicted energy source consumption by the vehicle and a price of an energy source of the vehicle at every stop along each of the one or more routes.

In addition to one or more of the features described above, or as an alternative, further embodiments may include that the operations further comprise: displaying each of the one or more potential routes and the predicted energy source consumption by the TRU for each of the one or more potential routes on a user device.

Technical effects of embodiments of the present disclosure include determining potential routes for a transportation refrigeration unit and analyzing each route based on fuel consumption of the transportation refrigeration unit.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The subject matter which is regarded as the disclosure is particularly pointed out and distinctly claimed in the claims at the conclusion of the specification. The foregoing and other features and advantages of the disclosure are apparent from the following detailed description taken in conjunction with the accompanying drawings in which:
The following descriptions should not be considered limiting in any way. With reference to the accompanying drawings, like elements are numbered alike:
FIG. 1 illustrates a schematic view of a system for determining potential routes for transportation of perishable goods, according to an embodiment of the present disclosure;
FIG. 2 illustrates a schematic view of a user device that displays potential routes, according to an embodiment of the present disclosure; and
FIG. 3 is a flow diagram illustrating a method for determining transportation for perishable goods, according to an embodiment of the present disclosure.

### DETAILED DESCRIPTION

A detailed description of one or more embodiments of the disclosed apparatus and method are presented herein by way of exemplification and not limitation with reference to the Figures.

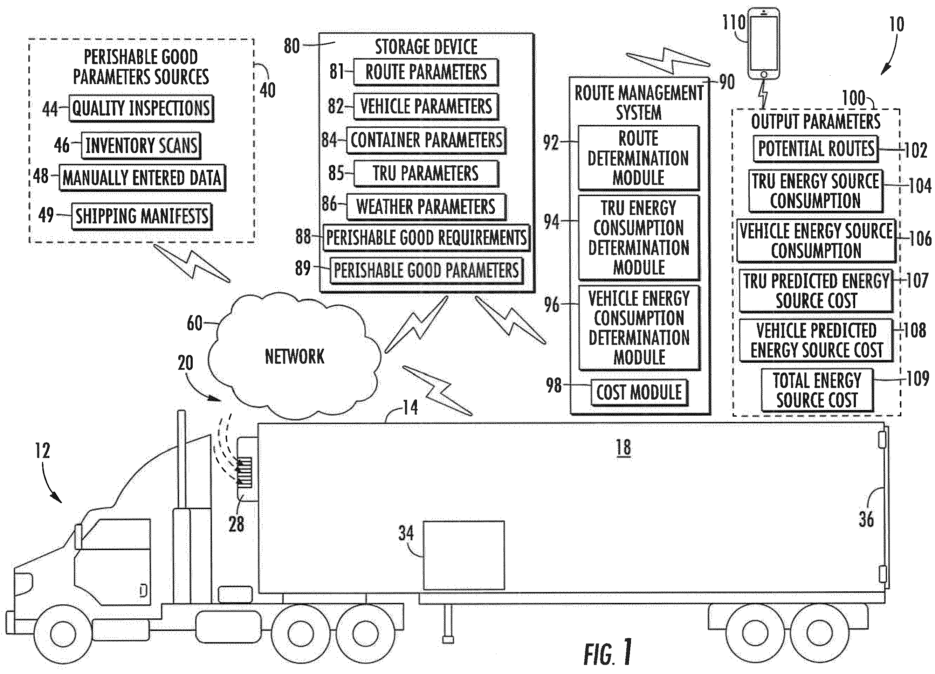

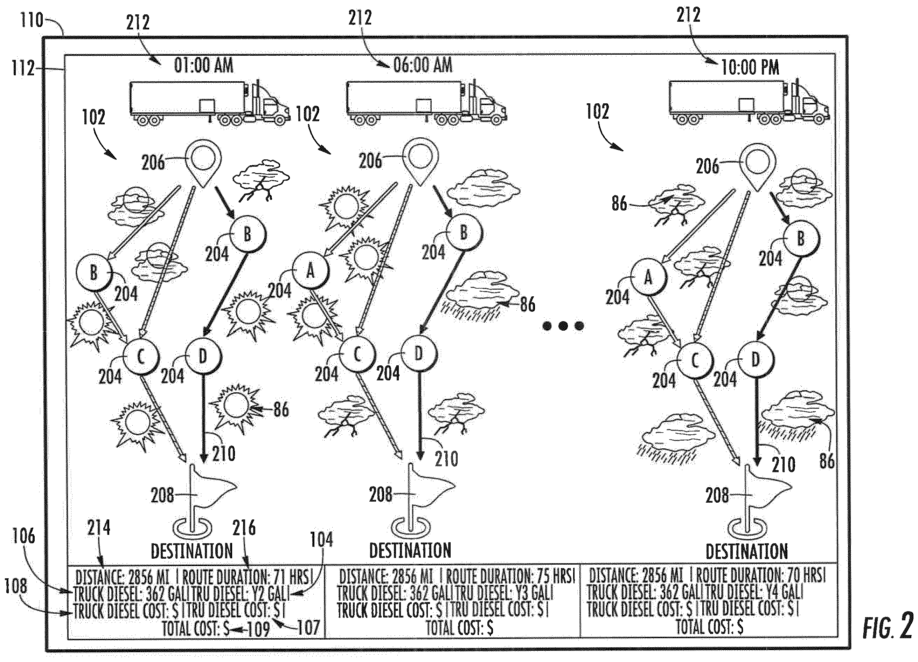

Referring now to the drawings, FIG. 1 illustrates a schematic view of a system 10 for determining potential routes 102 for transportation of perishable goods 34 and FIG. 2 illustrates a user device 110 that displays the potential routes 102. Typically, transport refrigeration systems 20 are used to transport and distribute perishable goods and environmentally sensitive goods (herein referred to as perishable goods 34). In the illustrated embodiment, a transport refrigeration system 20 includes an environmentally controlled container 14, a transport refrigeration unit 28 and perishable goods 34. The container 14 may be pulled by a vehicle 12. It is understood that embodiments described herein may be applied to shipping containers that are shipped by rail, sea, air, or any other suitable container, thus the vehicle may be a truck, train, boat, airplane, helicopter... etc. The container 14 may define an interior compartment 18.

In the illustrated embodiment, the transport refrigeration unit 28 is associated with a container 14 to provide desired environmental parameters, such as, for example temperature, pressure, humidity, carbon dioxide, ethylene, ozone, light exposure, vibration exposure, and other conditions to the interior compartment 18. In further embodiments, the transport refrigeration unit 28 is a refrigeration system capable of providing a desired temperature and humidity range. The transportation refrigeration unit (TRU) 28 may be powered by an energy source such as, for example, gasoline, diesel, electricity, or another known energy source to a person skilled in the art. The perishable goods 34 may include but are not limited to fruits, vegetables, grains, beans, nuts, eggs, dairy, seed, flowers, meat, poultry, fish, ice, blood, pharmaceuticals, or any other suitable cargo requiring cold chain transport. Perishable good parameters 89 of perishable goods located within the container 14 will determine perishable good requirements 88, which set the environmental conditions that the TRU 28 needs to provide within the interior compartment 18

Perishable good parameters 89 of the perishable goods 34 may be collected and stored in a storage device 80. Perishable good parameters 89 may include attributes of the perishable goods 34 such as, for example, perishable good type, temperature, weight, size, sugar content, maturity, grade, ripeness, labeling, and packaging. For instance, strawberries may be packaged in 1 pound clamshells, be a certain weight or grade, be organic, and have certain packaging or labels on the clamshells. This information specific to the perishable goods 34 may be used to help determine the environmental conditions that the TRU 28 needs to provide within the interior compartment 18. The perishable good parameters 89 may further be augmented with time, location stamps or other relevant information.

Perishable good parameters 89 may be provided by various perishable good parameter sources 40 including but not limited to quality inspections 44, inventory scans 46, manually entered data 48, and shipping manifests 49. Quality inspections 44 may reveal perishable good parameters 89 of the perishable goods 34, which may affect environmental conditions that the TRU 28 needs to provide within the interior compartment 18. For instance, a particular batch of fruit may be at peak ripeness at the time it is loaded into the container 14, thus the fruit must be kept frozen to make it to the final destination still fresh. Quality inspections 44 may be done by a machine or a human being. Quality inspections 44 performed by a machine may be accomplished using a variety of techniques including but not limited to optical, odor, soundwave, infrared, or physical probe. Inventory scans 46 may also reveal perishable good parameters 89 about the perishable goods 34 and may help in tracking what perishable goods are going to be shipped in the container 14. For instance, the inventory scan 46 may reveal the type, time, day, and the container 14 that will ship the perishable goods 34. The manually entered data 48 may be input via a variety of devices including but not limited to a cellular phone, tablet, laptop, smartwatch, a desktop computer or any other similar data input device known to one of skill in the art. A network 60 may be connected to a system containing shipping manifests 49 for the perishable goods 34 to be transported. Each shipping manifest 49 may contain perishable good parameters 89 for the perishable goods 34.

In the illustrated embodiment, the system 10 further includes a storage device 80 in electronic communication with the network to store the perishable good parameters 89 and perishable good requirements 88. The storage device 80 is connected to the other data sources 40 through the network 60. As shown, the storage device 80 also stores route parameters 81, vehicle parameters 82, container parameters 84, transportation refrigeration unit (TRU) parameters 85, weather parameters 86, perishable good requirements 88, and perishable good parameters 89. The storage device 80 may be but is not limited to a random access memory (RAM), read only memory (ROM), or other electronic, optical, magnetic or any other computer readable medium. Some parameters may be transmitted through the network 60 to the storage device 80 including but not limited to route parameters 81, weather parameters 86, and perishable good parameters 89.

Route parameters 81 may include an origination location 206 and a destination location 208. The origination location 206 may be a pick-up location for the perishable goods 34 and the destination location 208 may be a delivery location of the perishable goods 34. Route parameters 81 may also include a route time completion window. For example, the route time completion window may depict the earliest time that the perishable goods 34 may be picked up at the origination location 206 and the latest time that the perishable goods 34 may be delivered to the destination location 208. A departure time 212 may be chosen in order to satisfy the route time completion window. Route parameters 81 may also include information regarding traffic conditions along the potential routes 102 of the vehicle 12. Vehicle parameters 82 may include the range capabilities of the vehicle 12 transporting the perishable goods including but not limited to vehicle size, vehicle capacity, vehicle equipment, vehicle capability, driver availability, energy source capacity, energy source type, estimated energy source consumption, wind skirts, wind fairings, or other similar vehicle information. For example, a vehicle with a long range may be able to travel along routes with fewer places to refuel its energy source (e.g. gas stations or recharging stations). Container parameters 84 may include insulation capabilities (e.g. R-value) of the container 14 and the solar reflectance index (e.g. solar gain) of the container 14.

For example, a TRU 28 may not have to work as hard to keep perishable goods cool in a container 14 with a higher R-value, thus reducing energy source consumption of the TRU 28.

The TRU parameters 85 includes energy source consumption rates the TRU 28. The TRU parameters may be affected by elevation along a router and/or weather conditions. For example, a battery powered TRU 28 may see reduced efficiency in colder conditions. In another example, a diesel powered TRU 28 may see reduced efficiency at higher elevations. The weather parameters 86 include weather conditions that may be experienced between the origination location 206 and the destination location, including but not limited to temperature, barometric pressure, wind speed, wind direction, sunlight, cloud cover, storm warnings, humidity, ozone levels, and precipitation. For example, snowy weather conditions may result in a slowed rate of travel for the vehicle. In another example, extreme amounts of sunlight due to sunny weather may result in increased solar gain on the container 14, thus forcing the TRU 28 working at an accelerated rate to keep the perishable goods cool. The weather parameters may be obtained from an external online data base (e.g. AccuWeather, weather.org...etc.). The external online database may provide current and future weather information along all possible routes between an origination location 206 and a destination location 208. As mentioned above, the perishable good requirements 88 will dictate the environmental conditions that the TRU 28 needs to maintain within the container 14 in response to the perishable good parameters 89. The perishable good requirements 88 may be requirements for handling and/or packaging the perishable good 34 such as, for example government regulations or industry standards. For instance, the perishable good requirements 88 may dictate that eggs need to be kept at forty degrees Fahrenheit and stored in recycled cardboard egg crate containers.

In the illustrated embodiment, the system 10 further includes a route management system 90. The route management system 90 is also coupled to the storage device 80. As shown, the route management system 90 includes a route determination module 92, a transportation refrigeration unit (TRU) energy consumption determination module 94, and a vehicle energy consumption determination module 96. The route management system 90 may also include a processor (not shown) and an associated memory (not shown). The associated memory may be the storage device 80. The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium. The route determination module 92, the TRU energy consumption determination module 94, and vehicle energy consumption module 96 may be implemented in software as applications executed by the processor of route management system 90.

The route determination module 92 determines one or more potential routes 102 for the perishable goods 34 in response to at least one of the route parameters 81 and the vehicle parameters 82. The potential routes 102 determined by the route determination module 92 are transmitted to the TRU energy consumption determination module 94 and the vehicle energy consumption determination module 96.

The TRU energy consumption determination module 94 determines predicted energy source consumption 104 by the TRU 28 along each of the one or more potential routes 102 in response to at least one of the route parameters 81, the vehicle parameters 82, the container parameters 84, the TRU parameters, the weather parameters 86, the perishable good parameters 89, and the perishable good requirements 88.

The vehicle energy consumption determination module 96 determines predicted energy source consumption 106 by the vehicle 12 along each of the one or more potential routes 102 in response to at least one of the route parameters 81, the vehicle parameters 82, and the weather parameters 86. An overall predicted energy consumption may be determined by summing the predicted energy source consumption by the TRU 28 and the predicted energy source consumption by the vehicle 12 for each potential route 102.

The cost module 98 determines predicted energy source cost 107 for the TRU 28 along each of potential route 102. The cost module 98 will factor in the energy source cost (e.g. diesel price, or electricity rate) at every stop along each potential route 102. The cost module 98 also determines predicted energy source cost 108 for the vehicle 12 along each of potential route 102. The cost module 98 will factor in the energy source cost (e.g. diesel price, gas, price, electricity rate...etc.) at every stop along each potential route 102. Output parameters 100 of the route management system 90 may be accessible via the user device 110 and/or sent directly to the user device 110. The output parameters 100 may include potential routes 102, predicted energy source consumption 104 by the TRU 28, predicted energy source consumption 106 by the vehicle 12, determines predicted energy source cost 107 for the TRU 28, predicted energy source cost 108, and total energy source cost 109. The user device 110 may be a computing device such as a desktop computer. The user device 110 may also be a mobile computing device that is typically carried by a person, such as, for example a phone, PDA, smart watch, tablet, laptop, etc. The user device 110 may also be two separate devices that are synced together such as, for example, a cellular phone and a desktop computer synced over an internet connection.

The output parameters 100 may be displayed visually on a display screen 112 of the user device 110, as show in FIG. 2. The display screen 112 may display one or more potential routes 102. Multiple potential routes 102 may be displayed concurrently on the display screen 112 for comparison and/or each potential route 102 may be displayed one at a time. An individual using the user device 110 may scroll through the potential routes 102.

The route management system 90 may also calculate different time slots for each potential route 102 and determines a departure time 212 for each potential route 102. For example: The route management system 90 compares a first potential route 102, a second potential route 102, and a third potential route 102. The route management system 90 also compares each potential route 102 at different departure times 212. Given the advancement to autonomous trucks, departure times 212 are more flexible and shippers can route shipments independent of a driver's schedule. A potential route 102 with a departure time 212 in the morning would have different weather parameters 86 (e.g. more sunlight) than a departure time 212 in the evening, thus the route management system 90 may find the best departure time 212 and arrival time for each potential route 102.

As shown in FIG. 2, each potential route 102 may display the entire route from the origination location 206 to the destination location 208. Each potential route 102 may display each stop 204 along the route 102 along with the weather parameters 86 along each route segment 210. As also shown in FIG. 2, each potential route 102 may include route distance 214, route duration 216, energy source consumption 104 of the TRU 28, energy source consumption 106 of the vehicle 12, predicted energy source cost 107 of the TRU 28, predicted energy source cost 108 of the vehicle 12, and total energy source cost 109.

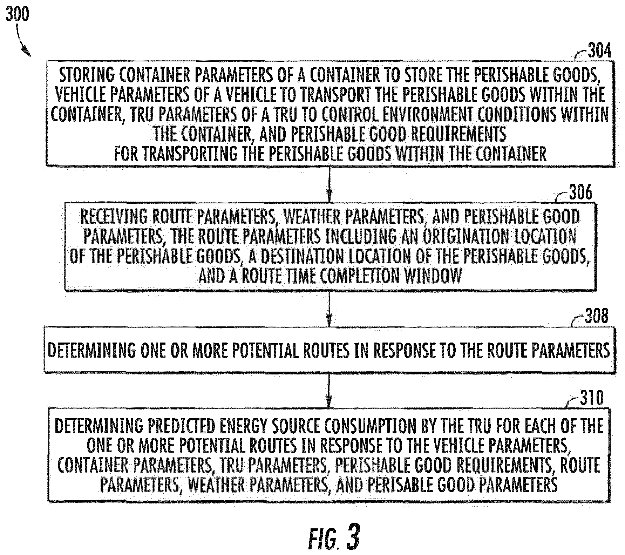

Referring now also to FIG. 3 with continued reference to FIGs. 1-2. FIG. 3 shows a flow diagram illustrating a method 300 of determining potential routes 102 for transportation of perishable goods 34, according to an embodiment of the present disclosure. At block 304, parameters of the system 10 are stored on a storage device 80. The parameters stored may include container parameters 84 of a container 14 to store the perishable goods 34, vehicle parameters 82 of a vehicle 12 to transport the perishable goods 34 within the container 14, TRU parameters 85 of a transportation refrigeration unit TRU 28 to control environment conditions within the container 14, and perishable good requirements 88 for transporting the perishable goods 34 within the container 14.

At block 306, additional parameters are received and then may be stored on the storage device 80. The parameters received may include route parameters 81, weather parameters 86, and perishable good parameters 89. As described above, the route parameters 81 may include an origination location 206 of the perishable goods 34, a destination location 208 of the perishable goods 34, and a route time completion window. At block 308, one or more potential routes 102 may be determined in response to the route parameters 81.

At block 310, predicted energy source consumption 104 by the TRU 28 for each of the one or more potential routes 102 in response to the vehicle parameters 82, container parameters 84, TRU parameters 85, perishable good requirements 88, route parameters 81, weather parameters 86, and perishable good parameters 89. The method 300 may also include: determining predicted energy source consumption 106 by the vehicle 12 for each of the one or more potential routes 102 in response to the vehicle parameters 82, route parameters 81, and weather parameters 86. Also, predicted energy source cost 107 of the TRU 28 may be determined for each of the one or more potential routes 102 in response to the predicted energy source consumption 104 by the TRU 28 and a price of an energy source of the TRU 28 at every stop 204 along each of the one or more routes 102.

A total predicted energy source consumption of the TRU 28 and the vehicle 12 for each of the one or more potential routes 102 may be determined in response to predicted energy source consumption 104 by the TRU 28 and the predicted energy source consumption 106 by the vehicle 12. Also, predicted energy source cost 108 of the vehicle 12 may be determined for each of the one or more potential routes 102 in response to the predicted energy source consumption 104 by the vehicle 12 and a price of an energy source of the vehicle 12 at every stop 204 along each of the one or more routes 102. It is understood that the energy source for the vehicle 12 and the TRU 28 may be different and thus should be calculated independently. A total predicted energy source cost 109 may be calculated for each of the one or more potential routes 102 in response to the predicted energy source cost 107 of the TRU 28 and the predicted energy source cost 108 of the vehicle 12.

While the above description has described the flow process of FIG. 3 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present disclosure without departing from the scope of the present invention. Therefore, it is intended that the present invention not be limited to the particular embodiment disclosed but that the present invention will include all embodiments falling within the scope of the claims.

The following clauses set out features of the present invention which may or may not presently be claimed but which may form basis for future amendments and/or a divisional application.
1. A method for determining potential routes for perishable goods, the method comprising:
   storing container parameters of a container to store the perishable goods, vehicle parameters of a vehicle to transport the perishable goods within the container, transportation refrigeration unit (TRU) parameters of a transportation refrigeration unit (TRU) to control environment conditions within the container, and perishable good requirements for transporting the perishable goods within the container;
   receiving route parameters, weather parameters, and perishable good parameters, the route parameters including an origination location of the perishable goods, a destination location of the perishable goods, and a route time completion window;
   determining one or more potential routes in response to the route parameters; and
   determining predicted energy source consumption by the TRU for each of the one or more potential routes in response to the vehicle parameters, container parameters, TRU parameters, perishable good requirements, route parameters, weather parameters, and perishable good parameters.
2. The method of clause 1, further comprising:
   determining predicted energy source consumption by the vehicle for each of the one or more potential routes in response to the vehicle parameters, route parameters, and weather parameters.
3. The method of clause 2, further comprising:
   determining a total predicted energy consumption of the TRU and the vehicle for each of the one or more potential routes in response to predicted energy source consumption by the TRU and predicted energy source consumption by the vehicle.
4. The method of clause 2, further comprising:
   determining a predicted energy source cost of the TRU for each of the one or more potential routes in response to the predicted energy source consumption by the TRU and a price of an energy source of the TRU at every stop along each of the one or more routes.
5. The method of clause 3, further comprising:
   determining a predicted energy source cost of the vehicle for each of the one or more potential routes in response to the predicted energy source consumption by the vehicle and a price of an energy source of the vehicle at every stop along each of the one or more routes.
6. The method of clause 5, further comprising:
   determining a predicted energy source cost of the TRU for each of the one or more potential routes in response to the predicted energy source consumption by the TRU and a price of an energy source of the TRU at every stop along each of the one or more routes; and
   determining a total energy source cost for each of the one or more potential routes in response to the predicted energy source cost of the TRU for each of the one or more potential routes and the predicted energy source cost of the vehicle for each of the one or more potential routes.
7. The method of clause 1, further comprising:
   displaying each of the one or more potential routes and the predicted energy source consumption by the TRU for each of the one or more potential routes on a user device.
8. A system for determining potential routes for perishable goods, the system comprising:
   a processor; and
   a memory comprising computer-executable instructions that, when executed by the processor, cause the processor to perform operations,
   the operations comprising:
      storing container parameters of a container to store the perishable goods, vehicle parameters of a vehicle to transport the perishable goods within the container, transportation refrigeration unit (TRU) parameters of a transportation refrigeration unit (TRU) to control environment conditions within the container, and perishable good requirements for transporting the perishable goods within the container;
      receiving route parameters, weather parameters, and perishable good parameters, the route parameters including an origination location of the perishable goods, a destination location of the perishable goods, and a route time completion window;
      determining one or more potential routes in response to the route parameters; and
      determining predicted energy source consumption by the TRU for each of the one or more potential routes in response to the vehicle parameters, container parameters, TRU parameters, perishable good requirements, route parameters, weather parameters, and perishable good parameters.
9. The system of clause 8, wherein the operations further comprise:
   determining predicted energy source consumption by the vehicle for each of the one or more potential routes in response to the vehicle parameters, route parameters, and weather parameters.
10. The system of clause 9, wherein the operations further comprise:
   determining a total predicted energy consumption of the TRU and the vehicle for each of the one or more potential routes in response to predicted energy source consumption by the TRU and predicted energy source consumption by the vehicle.
11. The system of clause 9, wherein the operations further comprise:
   determining a predicted energy source cost of the TRU for each of the one or more potential routes in response to the predicted energy source consumption by the TRU and a price of an energy source of the TRU at every stop along each of the one or more routes.
12. The system of clause 10 wherein the operations further comprise:
   determining a predicted energy source cost of the vehicle for each of the one or more potential routes in response to the predicted energy source consumption by the vehicle and a price of an energy source of the vehicle at every stop along each of the one or more routes.
13. The system of clause 12, wherein the operations further comprise:
   determining a predicted energy source cost of the TRU for each of the one or more potential routes in response to the predicted energy source consumption by the TRU and a price of an energy source of the TRU at every stop along each of the one or more routes; and
   determining a total energy source cost for each of the one or more potential routes in response to the predicted energy source cost of the TRU for each of the one or more potential routes and the predicted energy source cost of the vehicle for each of the one or more potential routes.
14. The system of clause 8, wherein the operations further comprise:
   displaying each of the one or more potential routes and the predicted energy source consumption by the TRU for each of the one or more potential routes on a user device.
15. A computer program product tangibly embodied on a computer readable medium, the computer program product including instructions that, when executed by a processor, cause the processor to perform operations comprising:
   storing container parameters of a container to store the perishable goods, vehicle parameters of a vehicle to transport the perishable goods within the container, transportation refrigeration unit (TRU) parameters of a transportation refrigeration unit (TRU) to control environment conditions within the container, and perishable good requirements for transporting the perishable goods within the container;
   receiving route parameters, weather parameters, and perishable good parameters, the route parameters including an origination location of the perishable goods, a destination location of the perishable goods, and a route time completion window;
   determining one or more potential routes in response to the route parameters; and
   determining predicted energy source consumption by the TRU for each of the one or more potential routes in response to the vehicle parameters, container parameters, TRU parameters, perishable good requirements, route parameters, weather parameters, and perishable good parameters.
16. The computer program product of clause 15, wherein the operations further comprise:
   determining predicted energy source consumption by the vehicle for each of the one or more potential routes in response to the vehicle parameters, route parameters, and weather parameters.
17. The computer program product of clause 16, wherein the operations further comprise:
   determining a total predicted energy consumption of the TRU and the vehicle for each of the one or more potential routes in response to predicted energy source consumption by the TRU and predicted energy source consumption by the vehicle.
18. The computer program product of clause 16, wherein the operations further comprise:
   determining a predicted energy source cost of the TRU for each of the one or more potential routes in response to the predicted energy source consumption by the TRU and a price of an energy source of the TRU at every stop along each of the one or more routes.
19. The computer program product of clause 17, wherein the operations further comprise:
   determining a predicted energy source cost of the vehicle for each of the one or more potential routes in response to the predicted energy source consumption by the vehicle and a price of an energy source of the vehicle at every stop along each of the one or more routes.
20. The computer program product of clause 15, wherein the operations further comprise:
   displaying each of the one or more potential routes and the predicted energy source consumption by the TRU for each of the one or more potential routes on a user device.

## Claims

1. A method for determining potential routes for perishable goods, the method comprising:
storing container parameters of a container to store the perishable goods, vehicle parameters of a vehicle to transport the perishable goods within the container, transportation refrigeration unit (TRU) parameters of a transportation refrigeration unit (TRU) to control environment conditions within the container, and perishable good requirements for transporting the perishable goods within the container;
receiving route parameters, weather parameters, and perishable good parameters, the route parameters including an origination location of the perishable goods, a destination location of the perishable goods, and a route time completion window;
determining one or more potential routes in response to the route parameters; and
determining predicted energy source consumption by the TRU for each of the one or more potential routes in response to the vehicle parameters, container parameters, TRU parameters, perishable good requirements, route parameters, weather parameters, and perishable good parameters.

2. The method of claim 1, further comprising:
determining predicted energy source consumption by the vehicle for each of the one or more potential routes in response to the vehicle parameters, route parameters, and weather parameters; and
optionally determining a total predicted energy consumption of the TRU and the vehicle for each of the one or more potential routes in response to predicted energy source consumption by the TRU and predicted energy source consumption by the vehicle.

3. The method of claim 2, further comprising:
determining a predicted energy source cost of the TRU for each of the one or more potential routes in response to the predicted energy source consumption by the TRU and a price of an energy source of the TRU at every stop along each of the one or more routes; and/or
determining a predicted energy source cost of the vehicle for each of the one or more potential routes in response to the predicted energy source consumption by the vehicle and a price of an energy source of the vehicle at every stop along each of the one or more routes.

4. The method of claim 3, further comprising:
determining a total energy source cost for each of the one or more potential routes in response to the predicted energy source cost of the TRU for each of the one or more potential routes and the predicted energy source cost of the vehicle for each of the one or more potential routes.

5. The method of any preceding claim, further comprising:
displaying each of the one or more potential routes and the predicted energy source consumption by the TRU for each of the one or more potential routes on a user device.

6. A system for determining potential routes for perishable goods, the system comprising:
a processor; and
a memory comprising computer-executable instructions that, when executed by the processor, cause the processor to perform operations, the operations comprising:
storing container parameters of a container to store the perishable goods, vehicle parameters of a vehicle to transport the perishable goods within the container, transportation refrigeration unit (TRU) parameters of a transportation refrigeration unit (TRU) to control environment conditions within the container, and perishable good requirements for transporting the perishable goods within the container;
receiving route parameters, weather parameters, and perishable good parameters, the route parameters including an origination location of the perishable goods, a destination location of the perishable goods, and a route time completion window;
determining one or more potential routes in response to the route parameters; and
determining predicted energy source consumption by the TRU for each of the one or more potential routes in response to the vehicle parameters, container parameters, TRU parameters, perishable good requirements, route parameters, weather parameters, and perishable good parameters.

7. The system of claim 6, wherein the operations further comprise:
determining predicted energy source consumption by the vehicle for each of the one or more potential routes in response to the vehicle parameters, route parameters, and weather parameters; and
optionally determining a total predicted energy consumption of the TRU and the vehicle for each of the one or more potential routes in response to predicted energy source consumption by the TRU and predicted energy source consumption by the vehicle.

8. The system of claim 7, wherein the operations further comprise:
determining a predicted energy source cost of the TRU for each of the one or more potential routes in response to the predicted energy source consumption by the TRU and a price of an energy source of the TRU at every stop along each of the one or more routes; and/or
determining a predicted energy source cost of the vehicle for each of the one or more potential routes in response to the predicted energy source consumption by the vehicle and a price of an energy source of the vehicle at every stop along each of the one or more routes.

9. The system of claim 8, wherein the operations further comprise:
determining a total energy source cost for each of the one or more potential routes in response to the predicted energy source cost of the TRU for each of the one or more potential routes and the predicted energy source cost of the vehicle for each of the one or more potential routes.

10. The system of any of claims 6 to 9, wherein the operations further comprise:
displaying each of the one or more potential routes and the predicted energy source consumption by the TRU for each of the one or more potential routes on a user device.

11. A computer program product tangibly embodied on a computer readable medium, the computer program product including instructions that, when executed by a processor, cause the processor to perform operations comprising:
storing container parameters of a container to store the perishable goods, vehicle parameters of a vehicle to transport the perishable goods within the container, transportation refrigeration unit (TRU) parameters of a transportation refrigeration unit (TRU) to control environment conditions within the container, and perishable good requirements for transporting the perishable goods within the container;
receiving route parameters, weather parameters, and perishable good parameters, the route parameters including an origination location of the perishable goods, a destination location of the perishable goods, and a route time completion window;
determining one or more potential routes in response to the route parameters; and
determining predicted energy source consumption by the TRU for each of the one or more potential routes in response to the vehicle parameters, container parameters, TRU parameters, perishable good requirements, route parameters, weather parameters, and perishable good parameters.

12. The computer program product of claim 11, wherein the operations further comprise:
determining predicted energy source consumption by the vehicle for each of the one or more potential routes in response to the vehicle parameters, route parameters, and weather parameters; and
optionally determining a total predicted energy consumption of the TRU and the vehicle for each of the one or more potential routes in response to predicted energy source consumption by the TRU and predicted energy source consumption by the vehicle.

13. The computer program product of claim 12, wherein the operations further comprise:
determining a predicted energy source cost of the TRU for each of the one or more potential routes in response to the predicted energy source consumption by the TRU and a price of an energy source of the TRU at every stop along each of the one or more routes.

14. The computer program product of claim 12 or 13, wherein the operations further comprise:
determining a predicted energy source cost of the vehicle for each of the one or more potential routes in response to the predicted energy source consumption by the vehicle and a price of an energy source of the vehicle at every stop along each of the one or more routes.

15. The computer program product of any of claims 11 to 14, wherein the operations further comprise:
displaying each of the one or more potential routes and the predicted energy source consumption by the TRU for each of the one or more potential routes on a user device.
